# EUROPEAN PATENT APPLICATION

(11) **EP 3 296 417 A1**
(43) Date of publication of application: **21.03.2018**
(21) Application number: 16883027.1
(22) Date of filing: 12.04.2016
(51) Int. Cl.: C22C 38/18

(54) **MICROALLOYED STEEL FOR CAR CARBON WHEEL HUB BEARING AND MANUFACTURING METHOD THEREFOR**

(30) Priority: 05.01.2016 CN 201610001624
(71) Applicant: Jiangyin Xingcheng Special Steel Works Co., Ltd, Jiangyin, Jiangsu 214429 (CN)
(72) Inventor: CHEN, Min, Jiangyin Jiangsu 214429 (CN); LI, Feng, Jiangyin Jiangsu 214429 (CN); YIN, Qing, Jiangyin Jiangsu 214429 (CN); ZHAI, Jiaolong, Jiangyin Jiangsu 214429 (CN); GENG, Ke, Jiangyin Jiangsu 214429 (CN); ZHANG, Jianfeng, Jiangyin Jiangsu 214429 (CN); HUANG, Zhen, Jiangyin Jiangsu 214429 (CN); BAO, Jian, Jiangyin Jiangsu 214429 (CN); RUAN, Xiaojiang, Jiangyin Jiangsu 214429 (CN)
(74) Representative: Hryszkiewicz, Danuta
(86) International application number: PCT/CN2016/079010
(87) International publication number: WO 2017/117883

(57) **Abstract**

A microalloyed steel for a car carbon wheel hub bearing, comprising chemical components: 0.45-0.70% of C, 0.10-0.50% of Si, 0.30-0.70% of Mn, 0.20-0.60% of Cr, less than or equal to 0.025% of P, 0.003-0.030% of S, less than or equal to 0.1 % of Mo, less than or equal to 0.2% of Ni, less than or equal to 0.04% of Al, less than or equal to 0.3% of Cu, less than or equal to 0.001 % of Ca, less than or equal to 0.003% of Ti, less than or equal to 0.001 % of O, less than or equal to 0.04% of As, less than or equal to 0.03% of Sn, less than or equal to 0.005% of Sb, less than or equal to 0.002% of Pb, and the balance being Fe and inevitable impurities. The manufacturing procedure is an electric furnace or a converter-secondary refining-VD or RH vacuum degassing-continuous casting-continuous rolling-sawing-stack cooling-finishing-surface and internal flaw detection-packing.

## Description

### DESCRIPTION

The invention relates to the field of special steel smelting, and more particularly, to a steel for hub bearings and a method for fabricating the same.

Hub bearing, which is mainly used for load bearing and accurate guidance of the hub rotation, is a very important part. The hub bearing can bear the axial load as well as the radial load. Therefore, the performance of the steel for hub bearing is strictly requested, especially, the abrasive resistance, the hardenability, the purity and the microstructure uniformity of the steel are even strictly requested. The present domestic and foreign steel products G55 and C56E2 used for hub bearing fail to perfectly satisfy the requirements of high-end car users due to the limitations of product quality, and it is an urgent need to develop a steel featuring better performance to be used as a raw material of hub bearing.

The working conditions of the hub bearing require the steel to feature: high fatigue strength, high elastic strength, high yield strength and tenacity, good wear resistance, high and uniform hardness, and favorable resistance to corrosion. In addition, because surface quenching is performed at the raceway of the hub bearing when the hub bearing is being processed, the hardenability of the steel is also strictly requested.

Nonmetal inclusions in the steel adversely affect the continuity and uniformity of the metal. When the hub bearing is being used, under the alternating stress, the inclusions cause the stress to concentrate and form fatigue crack source which decreases the fatigue life of the hub bearing. Especially, hard brittle inclusions such as Al₂O₃ inclusions (Type B) arranged in string or chain, undeformable punctate or spherical inclusions (Type D), and large-particle punctate or spherical inclusions (Type Ds) can barely be deformed when the hub bearing is processed and cause the stress to concentrate, and fatigue crack source is formed which adversely affects the improvement of fatigue performance of the hub bearing. Therefore, the purity of the steel is of great importance to the extension of service life of the hub bearing, and the size and amount of nonmetal inclusions, especially undeformable hard inclusions in the steel should be minimized.

High-end steel for hub bearing is sensitive to the microstructural uniformity and composition segregation, and especially sensitive to central carbon segregation which tends to cause nonuniform microstructure of the hub bearing, seriously affect the performance of product, and shorten the service life of the hub bearing. Therefore, the microstructural uniformity of the steel is strictly requested, and the central carbon segregation of the steel needs to be avoided.

In view of the above-described problems, it is one objective of the invention to provide a steel C56E2XS used for hub bearing. The chemical compositions of the steel are reasonably designed, and the intensity, hardness, tenacity, abrasive resistance and hardenability of the steel are satisfactory.

Nonmetal inclusions in the steel C56E2XS are listed in Table 1:

**Table 1**

| | | | | | | | | | |
|---|---|---|---|---|---|---|---|---|---|
| Type Level | A | | B | | C | | D | | DS |
| | Thin 2.0 | Thick 1.5 | Thin 1.5 | Thick 0.5 | Thin 0 | Thick 0 | Thin 1.0 | Thick 0.5 | 1.0 |

Nonmetal inclusions are tested according to GB/T 10561 A, and the maximums of all types of nonmetal inclusions are lower than the values in Table **1**.

Carbon content tested at a central carbon segregation area of the steel C56E2XS is less than or equal to 10% of normal content of smelting carbon, which is far less compared to the central carbon segregation in the prior art.

To achieve the above objective, in accordance with one embodiment of the invention, there is provided a steel for hub bearing, comprising: between 0.45 and 0.70 wt.% of carbon, between 0.10 and 0.50 wt.% of silicon, between 0.30 and 0.70 wt.% of manganese, between 0.20 and 0.60 wt.% of chromium, less than or equal to 0.025 wt.% of phosphorus, between 0.003 and 0.030 wt.% of sulfur, less than or equal to 0.1 wt.% of molybdenum, less than or equal to 0.2 wt.% of nickel, less than or equal to 0.04 wt.% of aluminum, less than or equal to 0.3 wt.% of copper, less than or equal to 0.001 wt.% of calcium, less than or equal to 0.003 wt.% of titanium, less than or equal to 0.001 wt.% of oxygen, less than or equal to 0.04 wt.% of arsenic, less than or equal to 0.03 wt.% of tin, less than or equal to 0.005 wt.% of antimony, and less than or equal to 0.002 wt.% of lead. The balance is iron and inevitable inclusions.

Chemical compositions of the steel are designed according to:

### 1) Determination of carbon content

Carbon is the most economical and the most fundamental strengthening element in the steel, and carbon can obviously improve the intensity of the steel via solution strengthening and precipitation strengthening. However, too much carbon tends to adversely affect the tenacity and ductility of the steel, therefore, carbon is determined to be between 0.45 and 0.70 wt.% of the steel, and the steel in the embodiments of the invention belongs to medium carbon steel.

### 2) Determination of silicon content

Silicon is added to the steel to strengthen ferrite, and improve intensity, elastic limit, and hardenability of the steel. However, silicon also increases the overheating sensitivity and the possibilities of crack and decarburization, therefore, silicon is determined to be between 0.10 and 0.50 wt.% of the steel in the embodiments of the invention.

### 3) Determination of manganese content

Manganese works as a deoxidizing element during the steelmaking process and can improve the hardenability of steel. Meanwhile, manganese fixes sulfur in the steel and forms MnS and (Fe, Mn)S which do less harm to the performance of steel, and FeS is reduced or avoided. Therefore, steel comprises between 0.10 and 0.70 wt.% of manganese to improve the purity and other performances of the steel. However, too much manganese tends to cause obvious temper brittlement, in addition, manganese helps the crystal grain grow, which increases the overheating sensitively and the possibility of crack, meanwhile, manganese decreases the dimensional stability of steel, resulting in negative influence. Too much manganese also weakens steel resistance to corrosion and affects the performance of the hub bearing. Existing domestic and foreign steel for hub bearing (such as G55, C56E2, etc.) generally comprises between 0.70 and 0.90 wt.% of manganese, and manganese is actually controlled to be about 0.80 wt.% of steel. The manganese content is relatively high, resulting in cracks on the steel surface, tendency of cracking during forging, adverse effect on the use, and shorter service life of the hub bearing. In view of the above problems, certain amount of manganese element is added to the steel so as to reserve the favorable factors including improved hardenability and purity of the steel, meanwhile, the manganese content cannot be too high so as to minimize the adverse influence of manganese, therefore, manganese is determined to be between 0.30 and 0.70 wt.% of the steel in the embodiments of the invention.

### 4) Determination of chromium content

Chromium is a carbide forming element, and works to improve hardenability, abrasive resistance, and corrosion resistance of the steel. One part of chromium in the steel displaces iron to form alloy cementite, and improves the tempering stability of steel, and the other part of chromium is melted in the ferrite to improve the intensity and hardness of the ferrite via solution strengthening. In addition, chromium also reduces the overheat tendency and the rate of surface decarburization of the steel. However, when the chromium content is too high, chromium is combined with carbon in the steel and forms bulky carbide which decreases the tenacity of the steel, and reduces the service life of the hub bearing. Meanwhile, too much chromium results in too high hardness of the steel to meet the requirement of clients (the clients generally require the hardness of the steel to be less than or equal to 255 HBW). Chromium, as a residual element, is less than or equal to 0.2 wt.% in existing domestic and foreign steel for hub bearing, and is not specially added, but considering that chromium improves the intensity, hardness, abrasive resistance, and corrosion resistance of the steel, prolongs the service life of hub bearing, and reduces the adverse influence of low manganese content on the hardenability of the steel, chromium element is added in the steel in the embodiments of the invention. Too much chromium results in high hardness of the steel, causes difficulty to process the steel, and forms indissolvable carbide, therefore, according to the manganese content, chromium is determined to be between 0.20 and 0.60 wt.% of the steel in the embodiments of the invention.

### 5) Determination of aluminum content

Aluminum works as a deoxidizing element of steel, and decreases amount of dissolved oxygen in molten steel. Aluminum and nitrogen form dispersed and thin aluminum nitride inclusion which can refine grain. However, during smelting process of steel, too much aluminum produces brittle inclusions including Al₂O₃ which affects the purity of molten steel, therefore, aluminum is determined to be less than or equal to 0.04 wt.% of the steel in the embodiments of the invention.

### 6) Determination of calcium content

Calcium tends to increase size and amount of large-size punctate oxide in the steel. Due to high hardness and poor plasticity of the punctate oxide, the punctate oxide is undeformed when the steel is being processed, and forms clearance at the interface, which adversely affects the performance of the steel. Therefore, calcium is determined to be less than or equal to 0.001 wt.% of the steel in the embodiments of the invention.

### 7) Determination of titanium content

Titanium forms titanium nitride and titanium carbonitride inclusions in the steel. The inclusions are hard and angular, and seriously influence the fatigue life of the hub bearing. Especially when the purity of steel is high, and other oxide inclusions are small in number, the titanium inclusions become a prominent problem. The titanium inclusions decrease the fatigue life of hub bearing, and also affect the coarseness of the hub bearing, therefore, titanium is determined to be less than or equal to 0.003 wt.% of the steel in the embodiments of the invention.

### 8) Determination of oxygen content

A lot of experiments indicated that decreasing the oxygen content is obviously beneficial for the improvement of fatigue life of the hub bearing, therefore, oxygen is determined to be less than or equal to 0.001 wt.% of the steel in the embodiments of the invention.

### 9) Determination of phosphorus content and sulfur content

Phosphorus causes segregation during steel solidification. In addition, phosphorus dissolved in ferrite tends to distort and coarsen the crystal grain, and increase the cold brittleness of the steel, therefore, phosphorus is determined to be less than or equal to 0.025 wt.% of the steel. Sulfur increases hot brittleness of steel, and decreases the ductility and tenacity of steel, but certain amount of sulfur improves machinability of steel, therefore, sulfur is determined to be between 0.003 and 0.03 wt.% of the steel in the embodiments of the invention.

### 10) Determination of arsenic content, tin content, antimony content and lead content

Microelements including arsenic, tin, antimony, and lead in the steel are low-melting nonferrous metal. Microelements produces soft points on the surface of hub bearing, and results in uneven hardness, therefore, microelements are harmful elements in the steel, and the steel is determined to comprise less than or equal to 0.04 wt.% of arsenic, less than or equal to 0.03 wt.% of tin, less than or equal to 0.005 wt.% of antimony, and less than or equal to 0.002 wt.% of lead.

A method for fabricating the steel for hub bearing comprises: smelting steel in an electric furnace or a converter; refining the steel; performing vacuum degassing or Ruhrstahl Heraeus (RH) vacuum degassing; continuously casting the steel; continuously rolling the steel; sawing the steel; stacking and cooling the steel; finishing the steel; detecting flaw on a steel surface and inside the steel; packaging the steel.

Main features of the fabricating method are as follows:
1. Molten iron, waste steel, and other raw materials used in the method are in high quality, thus harmful elements in the molten steel are reduced.
2. Deoxidation is strengthened in the refining process and residual aluminum content in the steel is ensured; due to favorable dynamic condition in the molten steel, early concentrated deoxidation and vacuum degassing are performed, thus nonmetal inclusions completely float upwards, and gas content is controlled to be relatively low.
3. Content, size, and structure of the inclusions in the steel are controlled. The method uses techniques including slag control by electric furnace, slag refining, selection and adding process optimization of deoxidizing agent, optimization of vacuum treatment, tundish metallurgy, ladle slag detection, and anti-oxidant defense during the whole casting process to reduce the amount of inclusions in the steel. In addition, the method uses high-quality refractory material to reduce the pollution of external inclusions to the molten steel, strengthen the control of the production process of steel, and control the morphology and composition of the inclusions.
4. The overheat pouring during the continuous casting process is under 35°C; with appropriate casting speed and appropriate intensity of secondary cooling, the growth of the continuous casting slab is ensured
5. The method uses both mold electromagnetic stirrer (M-EMS) and final electromagnetic stirrer (F-EMS) during the continuous casting process to effectively reduce the composition segregation of the continuous casting slab, especially by using the F-EMS, the density of the solidification structure of the casting slab is improved, and the central porosity and shrinkage holes of casting slab are effectively controlled, in addition, the secondary dendrite arm spacing is obviously mended, and the center equiaxed crystal ratio is obviously increased; the crystal grains are refined, thus the quality of the casting slab is obviously improved, and the composition segregation is decreased.
6. Prior to continuous rolling, the continuous casting slab is heated to between 1150 and 1250°C for more than 3 hrs to perform high-temperature diffusion and decrease the segregation of the steel.
7. Flaw detection on a steel surface and inside the steel is performed, and the quality of the steel is ensured.

Advantages of the steel and the method according to embodiments of the invention are summarized as follows:
1. Chemical compositions are reasonably designed, and intensity, hardness, tenacity, abrasive resistance, and hardenability of the steel are satisfactory.
2. Size and content of nonmetal inclusions in the steel are reduced, and the purity of the steel is ensured.
3. Central carbon segregation of the steel is decreased, and the uniformity of microstructure of the steel is ensured.

For further illustrating the invention, experiments detailing a steel for hub bearing and a method for fabricating the steel are described below.

Chemical compositions (wt.%) of the steel for hub bearing in the examples and chemical compositions (wt.%) of steel G55 and steel C56E2 (as a comparison) which are commonly used in the market are shown in Table 2 and Table 3:

**Table 2**

| | Example | C | Si | Mn | P | S | Cr | Mo | Ni | Al |
|---|---|---|---|---|---|---|---|---|---|---|
| Steel for hub bearing | 1 | 0.56 | 0.30 | 0.58 | 0.013 | 0.004 | 0.35 | 0.01 | 0.03 | 0.015 |
| Steel for hub bearing | 2 | 0.57 | 0.28 | 0.59 | 0.011 | 0.004 | 0.35 | 0.02 | 0.04 | 0.017 |
| Steel for hub bearing | 3 | 0.57 | 0.28 | 0.58 | 0.013 | 0.004 | 0.36 | 0.01 | 0.03 | 0.018 |
| Domestic steel G55 | 4 | 0.55 | 0.27 | 0.80 | 0.012 | 0.001 | 0.08 | 0.01 | 0.03 | 0.022 |
| Foreign steel C56E2 | 5 | 0.56 | 0.28 | 0.79 | 0.010 | 0.002 | 0.10 | 0.01 | 0.03 | 0.018 |

**Table 3**

| | Example | Cu | As | Sn | Sb | Pb | Ca | Ti | O |
|---|---|---|---|---|---|---|---|---|---|
| Steel for hub bearing | 1 | 0.06 | 0.0046 | 0.0067 | 0.0011 | 0.001 | 0.0001 | 0.0007 | 0.00058 |
| Steel for hub bearing | 2 | 0.07 | 0.0045 | 0.0067 | 0.0012 | 0.001 | 0.0002 | 0.0008 | 0.00059 |
| Steel for hub bearing | 3 | 0.06 | 0.0043 | 0.0067 | 0.0010 | 0.001 | 0.0001 | 0.0008 | 0.00058 |
| Domestic steel G55 | 4 | 0.05 | 0.0046 | 0.0050 | 0.0013 | 0.001 | 0.0004 | 0.0006 | 0.00057 |
| Foreign steel C56E2 | 5 | 0.06 | 0.0049 | 0.0044 | 0.0013 | 0.001 | 0.0003 | 0.0009 | 0.00062 |

A method for fabricating the steel for hub bearing comprises: smelting steel in an electric furnace or a converter; refining the steel; performing vacuum degassing or Ruhrstahl Heraeus (RH) vacuum degassing; continuously casting the steel; continuously rolling the steel; sawing the steel; stacking and cooling the steel; finishing the steel; detecting flaw on a steel surface and inside the steel; packaging the steel.

According to the chemical compositions, the method uses molten iron, waste steel, and raw materials all in high quality to reduce harmful elements in the molten steel. Deoxidation is strengthened in the refining process and residual aluminum content in the steel is ensured. Due to favorable dynamic condition in the molten steel, early concentrated deoxidation and vacuum degassing are performed, and nonmetal inclusions completely float upwards, and gas content is controlled to be relatively low. Content, size, and structure of the inclusions in the steel are controlled. The method uses techniques including slag control by electric furnace, slag refining, selection and adding process optimization of deoxidizing agent, optimization of vacuum treatment, tundish metallurgy, ladle slag detection, and anti-oxidant defense during the whole casting process to reduce the amount of inclusions in the steel. In addition, the method uses high-quality refractory material to reduce the pollution of external inclusions to the molten steel, strengthen the control of the production process of steel, and control the morphology and composition of the inclusions.

The low overheat pouring during the continuous casting process is under 35°C. The casting speed and the intensity of secondary cooling are appropriate. The continuous casting uses both mold electromagnetic stirrer (M-EMS) and final electromagnetic stirrer (F-EMS) to effectively reduce the composition segregation of the continuous casting slab. The casting slab is heated to between 1150 and 1250°C for more than 3 hrs to perform high-temperature diffusion and decrease the segregation of the steel.

Comparison of mechanical properties of steel in the examples is shown in Table 4:

**Table 4**

| | Example | Tensile strength (MPA) | Hardness (HBW) | End quenching J1.0 (HRC) | End quenching J2.0 (HRC) | End quenching J3.0 (HRC) | End quenching J4.0 (HRC) |
|---|---|---|---|---|---|---|---|
| Steel for hub bearing | 1 | 835 | 241 | 62 | 61 | 60 | 58 |
| Steel for hub bearing | 2 | 840 | 239 | 62 | 61.5 | 60 | 58 |
| Steel for hub bearing | 3 | 837 | 240 | 62 | 61 | 59.5 | 57 |
| Domestic steel G55 | 4 | 794 | 230 | 61 | 60.5 | 59 | 55 |
| Foreign steel C56E2 | 5 | 805 | 234 | 61 | 60 | 59 | 56 |

As shown in Table 4, in terms of intensity, hardness, tenacity, abrasive resistance, and hardenability, the steel for hub bearing in the examples of the invention equals to or is slightly better than existing steel for hub bearing.

In addition, carbon content tested at a central carbon segregation area of the steel C56E2XS in the examples is less than 10% of normal content of smelting carbon, thus the central carbon segregation is obviously controlled, and the microstructure uniformity of steel is ensured.

Nonmetal inclusions in the steel C56E2XS in the examples meet the requirements in Table **1**.

## Claims

1. A steel for hub bearing, comprising:
between 0.45 and 0.70 wt.% of carbon;
between 0.10 and 0.50 wt.% of silicon;
between 0.30 and 0.70 wt.% of manganese;
between 0.20 and 0.60 wt.% of chromium;
less than or equal to 0.025 wt.% of phosphorus;
between 0.003 and 0.030 wt.% of sulfur;
less than or equal to 0.1 wt.% of molybdenum;
less than or equal to 0.2 wt.% of nickel;
less than or equal to 0.04 wt.% of aluminum;
less than or equal to 0.3 wt.% of copper;
less than or equal to 0.001 wt.% of calcium;
less than or equal to 0.003 wt.% of titanium;
less than or equal to 0.001 wt.% of oxygen;
less than or equal to 0.04 wt.% of arsenic;
less than or equal to 0.03 wt.% of tin;
less than or equal to 0.005 wt.% of antimony; and
less than or equal to 0.002 wt.% of lead;
wherein
the balance is iron and inevitable inclusions.

2. A method for fabricating the steel of claim 1, the method comprising:
smelting steel in an electric furnace or a converter;
refining the steel;
performing vacuum degassing or Ruhrstahl Heraeus (RH) vacuum degassing;
continuously casting the steel;
continuously rolling the steel;
sawing the steel;
stacking and cooling the steel;
finishing the steel;
detecting flaw on a steel surface and inside the steel; and
packaging the steel.

3. The method of claim 2, **characterized in that** overheat pouring during continuous casting process is under 35°C.

4. The method of claim 2, **characterized in that** continuous casting uses both mold electromagnetic stirrer (M-EMS) and final electromagnetic stirrer (F-EMS).

5. The method of claim 2, **characterized in that** prior to continuous rolling, continuous casting slab is heated to between 1150 and 1250°C for more than 3 hrs to perform high-temperature diffusion.
